# EUROPEAN PATENT APPLICATION

(11) **EP 4 556 289 A1**
(43) Date of publication of application: **21.05.2025**
(21) Application number: 23929857.3
(22) Date of filing: 26.09.2023
(51) Int. Cl.: B60L 3/00, H02J 7/00

(54) **VEHICLE-MOUNTED CHARGER FAULT RAPID PROTECTION SYSTEM AND METHOD, AND VEHICLE**

(30) Priority: 29.03.2023 CN 202310317148
(71) Applicant: Deepal Automobile Nanjing Research Institute Co., Ltd., Nanjing, Jiangsu 211215 (CN)
(72) Inventor: XU, Kai, Chongqing 401135 (CN); LIU, Yu, Chongqing 401135 (CN); PENG, Longfei, Chongqing 401135 (CN)
(74) Representative: 2K Patentanwälte Blasberg Kewitz & Reichel
(86) International application number: PCT/CN2023/121342
(87) International publication number: WO 2024/198283

(57) **Abstract**

A vehicle-mounted charger fault rapid protection system, comprising a PFC power circuit, a high-voltage bus capacitor, a bridge-type isolation conversion power circuit, a PFC controller and a bridge-type circuit controller. The PFC power circuit is separately connected to the high-voltage bus capacitor and the PFC controller. The bridge-type isolation conversion power circuit is separately connected to the high-voltage bus capacitor and the bridge-type circuit controller. The bridge-type circuit controller is connected to the PFC controller by means of a hardwired channel. The PFC controller judges, according to a sampled signal, whether the PFC power circuit has an abnormal state causing circuit failure, and if so, outputs a fault protection signal and inputs the fault protection signal into the bridge-type circuit controller by means of the hardwired channel. The bridge-type circuit controller stops output of the bridge-type isolation conversion power circuit when detecting the fault protection signal output by the PFC controller. Also provided are a method and a vehicle adopting the protection system. By adopting the system, rapid protection can be carried out when a fault occurs in a charger.

## Description

### TECHNICAL FIELD

The present invention relates to the field of charging technologies of electric vehicles, and specifically, to a vehicle-mounted charger fault rapid protection system and method and a vehicle.

### BACKGROUND

An abnormality may occur in a charging process of a charger, and how to reduce an impact of the abnormality on hardware is extremely important. For example, publication No. CN111463874A discloses a new energy automobile AC/DC conversion charger overload protection circuit and an overload control method. The circuit includes an anti-interference power supply module, an overload protection module, and a rectification control module. A common-mode inductor LF1 in the anti-interference power supply module filters an electromagnetic interference signal generated in an alternating current to avoid emission of the interference signal. The overload protection module obtains a voltage provided by the anti-interference power supply module, an operational amplifier U1 adjusts a voltage conduction path according to an obtained voltage value, and a resistor R6, a resistor R7, and a resistor R8 constitute a buck circuit, thereby preventing an excessively large main circuit voltage from causing an increase in a temperature of an internal device, and further preventing safety of an output voltage from being affected. The rectification control module converts an alternating current into a direct current through a transformer TR1; and then the converted voltage is subjected to voltage regulation processing through a bridge-type voltage regulator DRT, a capacitor C6 and a resistor R10 constitute a rectifying circuit, and a positive terminal of the converted direct current is controlled through a triode Q1, so that safety of a voltage of the charger during AC/DC conversion is protected. For another example, publication No. CN105098701A discloses a short-circuit protection circuit and method of a vehicle-mounted charger. The circuit includes amplification circuits, comparison circuits, logical judgment circuits, and a central processing unit. A current and a voltage of a high-voltage output terminal are input into respective amplification circuits. The amplification circuits are respectively connected to the comparison circuits. The comparison circuits are connected to the logical judgment circuit. The logical judgment circuit performs judgment. The short-circuit protection method is as follows: the current and the voltage of the high-voltage output terminal are detected, detected signals are amplified through the amplification circuits and compared with reference values of the comparison circuits, and the logical judgment circuit performs judgment. If a short-circuit condition occurs actually, a chopper circuit drive tube and a relay on an output loop are shut off, so that a circuit of the vehicle-mounted charger is protected. The protection circuit is independent of overcurrent protection and can act quickly when the short-circuit condition occurs, thereby protecting devices inside the charger, shutting off outputting of the charger, and guaranteeing personal safety. Undoubtedly, the technical solutions disclosed in the foregoing two applications are beneficial attempts in the technical field to which the applications belong.

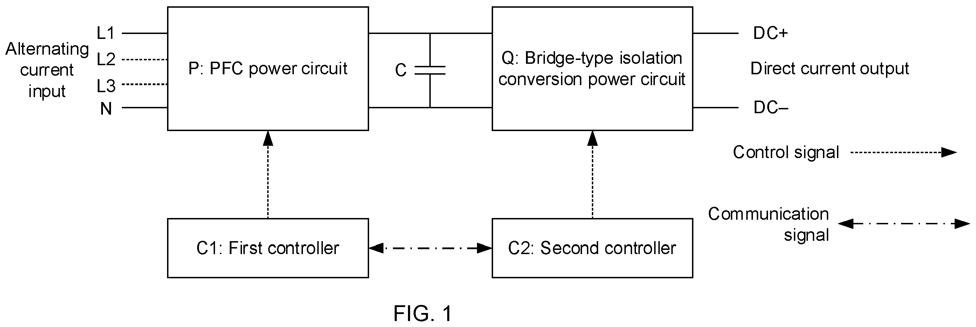

An electric vehicle vehicle-mounted alternating-current charger (hereinafter referred to as a charger for short) is an apparatus that converts single-phase or three-phase alternating-current mains electricity into direct-current electricity to charge a power battery of an electric vehicle. The charger mainly includes a PFC power circuit, a bridge-type isolation conversion power circuit, and corresponding controllers, as shown in FIG. 1. A first controller configured to control the PFC power circuit and a second controller configured to control the bridge-type isolation conversion power circuit can work independently to control respective power circuits. However, to implement an overall alternating-current charging function, the two controllers need to work collaboratively. Considering factors such as a chip computing capability, a hardware solution design, and costs, a commonly used collaboration method is that a master-slave working mode is set for the two controllers, the first controller is set as a master controller, and the second controller is set as a slave controller. The slave controller works or stops working according to a requirement instruction delivered by the master controller, and information exchange is performed between the master controller and the slave controller through digital communication. During project implementation, it is found that when the PFC power circuit first fails and shuts down proactively, due to a communication delay, the master controller cannot receive a working state fed from the slave controller and continues to operate in a normal mode. The proactive shutdown of the PFC power circuit causes a rapid drop in an input voltage of the backend bridge-type isolation conversion power circuit. Consequently, it is too late for the master controller to perform fault protection to deal with surge of an internal loop current of the bridge-type isolation conversion power circuit that is caused by an abrupt change of the input voltage, which eventually results in a damage to a power device.

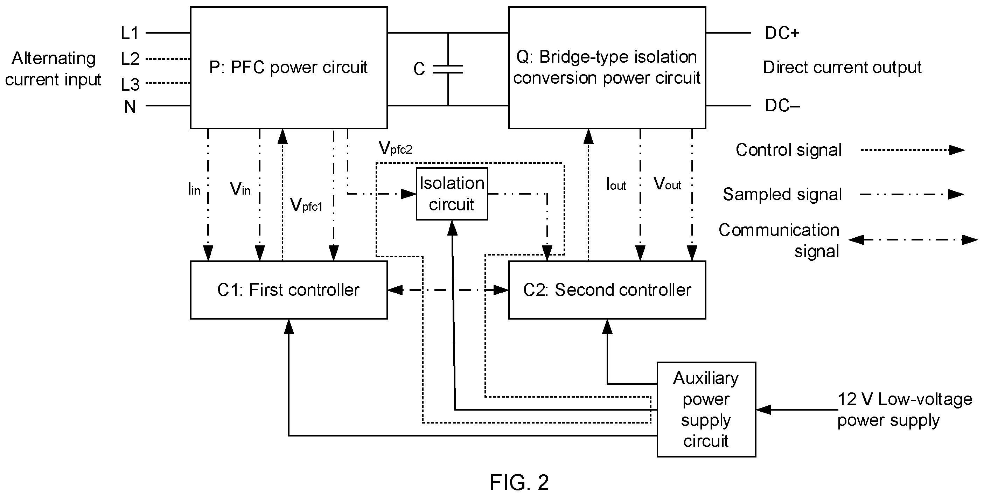

Currently, there are methods that have resolved this problem to some extent, that is, adding one channel of PFC output voltage sampling along with corresponding isolation circuit and auxiliary power supply circuit. As shown in FIG. 2, a voltage value is transmitted to a first controller in real time, and the first controller judges whether the voltage reaches a set protection threshold in real time, to shorten a fault response time and implement rapid protection. However, this method has two main drawbacks. First, a redundant sampling circuit and the isolation circuit and auxiliary power supply circuit that are required thereby increase hardware costs and also enlarge a product size to some extent. Second, the sampling signal can not be shared with the PFC output voltage sampling of the PFC power circuit. Its application is limited to only fault protection, resulting in low cost-effectiveness.

Therefore, it is necessary to develop a new vehicle-mounted charger fault rapid protection system and method and a vehicle.

### SUMMARY

An objective of the present invention is to provide a vehicle-mounted charger fault rapid protection system and method and a vehicle, to perform rapid protection on a vehicle-mounted charger when a fault occurs in the vehicle-mounted charger.

According to a first aspect, the present invention provides a vehicle-mounted charger fault rapid protection system, including: a PFC power circuit, a high-voltage bus capacitor, a bridge-type isolation conversion power circuit, a PFC controller, and a bridge-type circuit controller. The PFC power circuit is separately connected to the high-voltage bus capacitor and the PFC controller. The bridge-type isolation conversion power circuit is separately connected to the high-voltage bus capacitor and the bridge-type circuit controller. The PFC power circuit is configured to connect to an alternating current input. The bridge-type isolation conversion power circuit is configured to connect to a power battery.

The bridge-type circuit controller is connected to the PFC controller through a hardwired channel H, and the hardwired channel H is configured to transmit data related to an abnormal state of the PFC power circuit.

The PFC controller is configured to judge, in real time according to a sampled signal thereof, whether the PFC power circuit has an abnormal state causing circuit failure. If so, the PFC controller outputs a fault protection signal and inputs the fault protection signal into the bridge-type circuit controller by means of the hardwired channel H. The bridge-type circuit controller performs a fault protection action to stop output of the bridge-type isolation conversion power circuit when detecting the fault protection signal output by the PFC controller.

Optionally, the bridge-type circuit controller is further configured to: collect a high-voltage direct-current output current Iₒᵤₜ and a high-voltage direct-current output voltage Vₒᵤₜ that are output by the bridge-type isolation conversion power circuit, and judge, in real time according to the collected high-voltage direct-current output current Iₒᵤₜ and high-voltage direct-current output voltage Vₒᵤₜ, whether the bridge-type circuit controller has an abnormal state causing circuit failure; and if so, perform the fault protection action to stop output of the bridge-type isolation conversion power circuit, to achieve an objective of hardware protection.

Optionally, the PFC controller includes a first core control chip and a first sampling circuit and a first drive signal output circuit that are connected to the first core control chip, and the PFC controller is connected to the PFC power circuit through the first sampling circuit and the first drive signal output circuit separately.

The first sampling circuit is configured to collect an alternating-current input current Iᵢₙ, an alternating-current input voltage Vᵢₙ, and a high-voltage bus voltage V_{pfc} that are output by the PFC power circuit.

The first drive signal output circuit is configured to output a drive signal Q1 to the PFC power circuit.

The first core control chip is configured to output the drive signal Q1 to drive a first power device in the PFC power circuit, and stop output of all the drive signals Q1 when an abnormal fault occurs in the PFC power circuit.

Optionally, the first sampling circuit includes an alternating current sampling input channel, an alternating voltage sampling input channel, and a PFC voltage sampling input channel.

The alternating current sampling input channel is configured to collect the alternating-current input current Iᵢₙ output by the PFC power circuit.

The alternating voltage sampling input channel is configured to collect the alternating-current input voltage Vᵢₙ output by the PFC power circuit.

The PFC voltage sampling input channel is configured to collect the high-voltage bus voltage V_{pfc} output by the PFC power circuit.

Optionally, the collected alternating-current input current Iᵢₙ is compared with a preset alternating-current input current normal range.

The collected alternating-current input voltage Vᵢₙ is compared with a preset alternating-current input voltage normal range.

The collected high-voltage bus voltage V_{pfc} is compared with a preset high-voltage bus voltage normal range.

It is considered that the PFC power circuit has the abnormal state if the alternating-current input current Iᵢₙ is not in the preset alternating-current input current normal range, the alternating-current input voltage Vᵢₙ is not in the preset alternating-current input voltage normal range, or the high-voltage bus voltage V_{pfc} is not in the preset high-voltage bus voltage normal range.

Optionally, the first core control chip has at least a first comparator connected to the PFC voltage sampling input channel. The first comparator is connected to an input terminal of the hardwired channel H. In the PFC controller, a V_{pfc} voltage sampling channel of the first core control chip is set to be associated with the first comparator built in the chip. An output of the first comparator is connected to the input terminal of the hardwired channel H. Comparison logic is set as that the first comparator outputs the high level when the voltage V_{pfc} is less than a preset voltage value. A hardware device built in the chip is used to enable the PFC controller to have a faster response speed for dropping of the V_{pfc} voltage. Another fault may still be judged by using software in the chip. According to the foregoing method, the PFC controller can judge, in real time according to the sampled signal thereof, whether the PFC power circuit has the abnormal state causing the circuit failure. If so, the PFC controller outputs the fault protection signal (for example, outputs the high level). When detecting the fault protection signal output by the PFC controller (that is, the low level changes into the high level), the bridge-type circuit controller performs the fault protection action to stop output of the bridge-type isolation conversion power circuit. Because the hardwired channel H is asynchronously triggered, information transmission is fast, which is about 200 ns. After the present invention is used, quick response can be made when it is detected that the PFC power circuit has the abnormal state causing the circuit failure, thereby protecting the bridge-type isolation conversion power circuit.

Optionally, the first core control chip further has
a second comparator connected to the alternating current sampling input channel; and
a third comparator connected to the alternating voltage sampling input channel.

The second comparator, the third comparator, and the first comparator are all connected to the input terminal of the hardwired channel H.

The first core control chip judges the abnormal state by using the comparators, which is implemented through interaction between an internal sampling channel configured in the chip and the comparators built in the chip. In addition, outputs of the comparators are directly connected to the hardwired channel H. A real-time signal collected through a sampling channel is input into a corresponding comparator. The comparator compares a real-time signal value with preset fault values (including the preset alternating-current input current normal range, the preset alternating-current input voltage normal range, and the preset high-voltage bus voltage normal range). If the real-time signal value is greater than or less than the preset fault value, the corresponding comparator directly outputs the high level through the hardwired channel H. In this method, a protection response speed for faults such as overvoltage, undervoltage, and overcurrent is further increased by using the hardware device built in the first core control chip, thereby increasing a system safety margin. If abnormality determining requires simultaneous participation of a plurality of channels of real-time signals, an independent sampling channel and comparator need to be configured for each channel of signal, and finally, outputs of all comparators are connected to the hardwired channel H after being connected in parallel.

Optionally, the first core control chip of the PFC controller is connected to the bridge-type circuit controller through the hardwired channel H, the hardwired channel H is configured to transmit the data related to the abnormal state of the PFC power circuit, and the PFC controller keeps to output a low level to the bridge-type circuit controller if the PFC controller judges that the abnormal state does not exist or the PFC controller outputs a high level and the high level is maintained during a period of the abnormal state if the PFC controller judges that the abnormal state exists. Because the hardwired channel H is asynchronously triggered, information transmission is fast, which is about 200 ns. Therefore, abnormal state information transmission faster than digital communication is implemented through the hardwired channel.

Optionally, the first core control chip of the PFC controller is connected to the bridge-type circuit controller through digital communication COM, and the digital communication COM is used for communication interaction of data, a working state, and a control instruction, and has an advantage of a large data transmission volume. However, the digital communication COM requires a long data processing time, and transmits data once with a fixed cycle of 100 ms.

Optionally, the bridge-type circuit controller includes a second core control chip and a second sampling circuit and a second drive signal output circuit that are separately connected to the second core control chip, and the bridge-type circuit controller is connected to the collection bridge-type isolation conversion power circuit through the second sampling circuit and the second drive signal output circuit separately.

The second sampling circuit is configured to collect a high-voltage direct-current output current Iₒᵤₜ and a high-voltage direct-current output voltage Vₒᵤₜ that are output by the bridge-type isolation conversion power circuit.

The second drive signal output circuit is configured to output a drive signal Q2 to the bridge-type isolation conversion power circuit.

The second core control chip is configured to output the drive signal Q2 to drive a second power device in the bridge-type circuit controller, and stop output of the drive signal Q2 when detecting the fault protection signal output by the PFC controller or detecting that the bridge-type circuit controller has an abnormal state causing circuit failure. Therefore, hardware of the bridge-type isolation conversion power circuit is protected, and an internal loop is prevented from having overcurrent.

Optionally, the collected high-voltage direct-current output voltage Vₒᵤₜ is compared with a preset high-voltage direct-current output voltage.

The high-voltage direct-current output current Iₒᵤₜ is compared with a preset high-voltage direct-current output current.

Outputting of the drive signal Q2 is stopped if the high-voltage direct-current output voltage Vₒᵤₜ is greater than the preset high-voltage direct-current output voltage, the high-voltage direct-current output current Iₒᵤₜ is greater than the preset high-voltage direct-current output current, or a level received through the hardwired channel H is a high level. Therefore, hardware protection is implemented.

Optionally, the alternating current input includes four inputs: a live wire L1, a live wire L2, a live wire L3, and a neutral wire N.

The PFC power circuit includes a single-phase alternating current input mode and a three-phase alternating current input mode that are used to convert a single-phase alternating current or a three-phase alternating current into a high-voltage constant direct current.

The live wire L1 and the neutral wire N are connected to the PFC power circuit when the PFC power circuit is in the single-phase alternating current mode.

The live wire L1, the live wire L2, the live wire L3, and the neutral wire N are all connected to the PFC power circuit when the PFC power circuit is in the three-phase alternating current mode.

Optionally, the system further includes an auxiliary power supply, where the auxiliary power supply is separately connected to the PFC controller and the bridge-type circuit controller.

According to a second aspect, the present invention provides a vehicle-mounted charger fault rapid protection method, adopting the vehicle-mounted charger fault rapid protection system described in the present invention. The method includes the following steps:

The PFC controller judges, in real time according to a sampled signal thereof, whether the PFC power circuit has an abnormal state causing circuit failure.

A fault protection signal is output to the bridge-type circuit controller when the PFC controller judges that the abnormal state exists.

The bridge-type circuit controller performs a fault protection action based on the fault protection signal, to stop output of the bridge-type isolation conversion power circuit.

According to a third aspect, the present invention provides a vehicle, adopting the vehicle-mounted charger fault rapid protection system described in the present invention.

Beneficial effects of the present invention are as follows:
(1) The PFC controller is connected to the bridge-type circuit controller through the hardwired channel H, and the hardwired channel H is configured to transmit data such as the abnormal state. Because a transmission speed of the hardwired channel H is about 200 ns, only one sampling channel is required to sample V_{pfc} and input V_{pfc} into the PFC controller. Then, V_{pfc} is transmitted to the bridge-type circuit controller through the hardwired channel H. Therefore, the sampling signal can be shared with sampling of the PFC output voltage of the PFC power circuit.
(2) Because the transmission speed of the hardwired channel H is about 200 ns, even if the voltage V_{pfc} is first input into the PFC controller and then transmitted to the bridge-type circuit controller, the bridge-type circuit controller can still be rapidly protected when it is judged that the PFC power circuit has the abnormal state causing the circuit failure.
(3) Compared with an existing system, one sampling channel and an isolation circuit required thereby are omitted from this system. In addition, because the isolation circuit (the isolation circuit usually includes usually the isolation circuit includes devices such as a digital isolator, several filter circuits including resistor-capacitor devices, and several voltage regulation circuits including transistors) is omitted, one channel is further omitted from the auxiliary power supply (that is, one transformer and several diodes and resistor-capacitor devices are omitted), thereby reducing overall costs of the system by 5%, and reducing a size by 5%.

### BRIEF DESCRIPTION OF DRAWINGS

To describe the technical solutions in the embodiments of the present invention more clearly, the following briefly describes the accompanying drawings required for describing the embodiments or the conventional technology. Clearly, the accompanying drawings in the following description merely show some embodiments of this application, and a person of ordinary skill in the art can still derive other drawings from these accompanying drawings without creative efforts.
FIG. 1 is a block diagram of one principle according to the conventional technology;
FIG. 2 is a block diagram 2 of another principle according to the conventional technology;
FIG. 3 is a block diagram of a principle according to an embodiment;
FIG. 4 is a block diagram of a main principle of a PFC controller according to an embodiment; and
FIG. 5 is a block diagram of a main principle of a bridge-type circuit controller according to an embodiment.
101. Alternating current input; 102. PFC power circuit; 103. High-voltage bus capacitor; 104. Bridge-type isolation conversion power circuit; 105. Power battery; 106. PFC controller; 107. Bridge-type circuit controller; and 108. Auxiliary power supply.

### DESCRIPTION OF EMBODIMENTS

The following describes implementations of the technical solutions of the present invention with reference to accompanying drawings and preferred embodiments. A person skilled in the art can easily understand other advantages and effects of the present invention based on content disclosed in this specification. The present invention may be further implemented or applied by using other different specific implementations. Various details in this specification may also be modified or changed based on different viewpoints and applications without departing from the present invention. It should be understood that the preferred embodiments are merely intended to describe the present invention, and are not intended to limit the protection scope of the present invention.

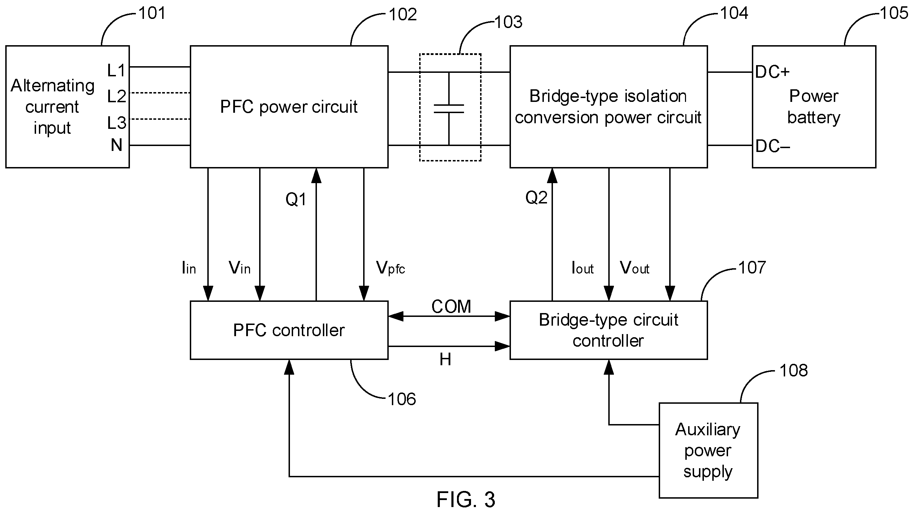

As shown in FIG. 3, in this embodiment, a vehicle-mounted charger fault rapid protection system is provided, and includes a PFC power circuit 102, a high-voltage bus capacitor 103, a bridge-type isolation conversion power circuit 104, a PFC controller 106, and a bridge-type circuit controller 107. The PFC power circuit 102 is separately connected to two terminals of the high-voltage bus capacitor 103, and the PFC power circuit 102 is further connected to the PFC controller 106. The bridge-type isolation conversion power circuit 104 is configured to buck/boost a high-voltage constant direct current according to a load requirement. The bridge-type isolation conversion power circuit 104 is separately connected to the two terminals of the high-voltage bus capacitor 103, and the bridge-type isolation conversion power circuit 104 is further connected to the bridge-type circuit controller 107. The bridge-type circuit controller 107 is connected to the PFC controller 106 through a hardwired channel H, and the hardwired channel H is configured to transmit data related to an abnormal state of the PFC power circuit 102.

During use, the PFC power circuit 102 is connected to an alternating current input 101. The PFC power circuit 102 converts an alternating current output by the alternating current input 101 into a high-voltage constant direct current, and corrects a power factor of the alternating current input 101. The bridge-type isolation conversion power circuit 104 is connected to a power battery 105. The PFC controller 106 judges, in real time according to a sampled signal thereof, whether the PFC power circuit 102 has an abnormal state causing circuit failure. If so, the PFC controller 106 outputs a fault protection signal and inputs the fault protection signal into the bridge-type circuit controller 107 through the hardwired channel H. When detecting the fault protection signal output by the PFC controller 106, the bridge-type circuit controller 107 performs a fault protection action to stop output of the bridge-type isolation conversion power circuit 104.

In this embodiment, the bridge-type circuit controller 107 is further configured to: collect a high-voltage direct-current output current Iₒᵤₜ and a high-voltage direct-current output voltage Vₒᵤₜ that are output by the bridge-type isolation conversion power circuit 104, and judge, in real time according to the collected high-voltage direct-current output current Iₒᵤₜ and high-voltage direct-current output voltage Vₒᵤₜ, whether the bridge-type circuit controller 107 has an abnormal state causing circuit failure; and if so, perform the fault protection action to stop output of the bridge-type isolation conversion power circuit 104, to achieve an objective of hardware protection.

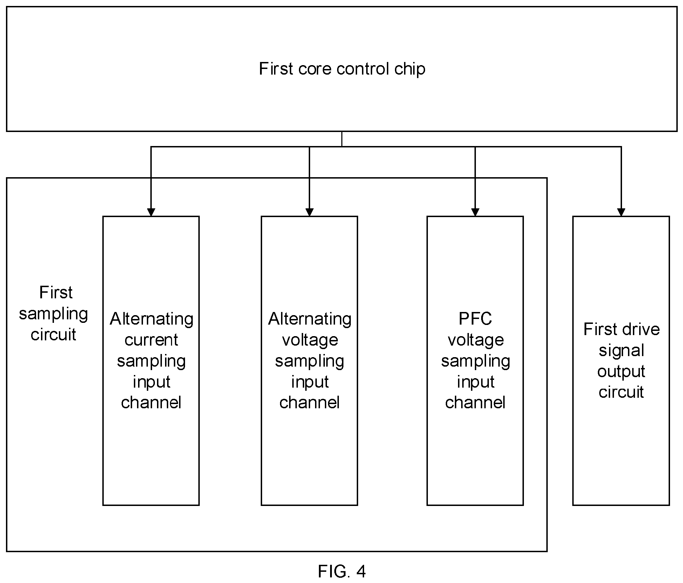

As shown in FIG. 4, in this embodiment, the PFC controller 106 includes a first core control chip and a first sampling circuit and a first drive signal output circuit (that is, a first drive signal output channel) that are connected to the first core control chip, and the PFC controller 106 is connected to the PFC power circuit 102 through the first sampling circuit and the first drive signal output circuit separately. The first sampling circuit is configured to collect an alternating-current input current Iᵢₙ, an alternating-current input voltage Vᵢₙ, and a high-voltage bus voltage V_{pfc} that are output by the PFC power circuit 102. The first drive signal output circuit is configured to output a drive signal Q1 to the PFC power circuit. The first core control chip is configured to output the drive signal Q1 to drive a first power device in the PFC power circuit 102, and stop output of all drive signals Q1 when an abnormal fault occurs in the PFC power circuit 102, to achieve the objective of hardware protection.

As shown in FIG. 4, in this embodiment, the first sampling circuit includes an alternating current sampling input channel, an alternating voltage sampling input channel, and a PFC voltage sampling input channel. The alternating current sampling input channel is configured to collect the alternating-current input current Iᵢₙ output by the PFC power circuit 102. The alternating voltage sampling input channel is configured to collect the alternating-current input voltage Vᵢₙ output by the PFC power circuit 102. The PFC voltage sampling input channel is configured to collect the high-voltage bus voltage V_{pfc} output by the PFC power circuit 102.

During working, the collected alternating-current input current Iᵢₙ is compared with a preset alternating-current input current normal range; the collected alternating-current input voltage Vᵢₙ is compared with a preset alternating-current input voltage normal range; and the collected high-voltage bus voltage V_{pfc} is compared with a preset high-voltage bus voltage normal range. It is considered that the PFC power circuit 102 has the abnormal state if the alternating-current input current Iᵢₙ is not in the preset alternating-current input current normal range, the alternating-current input voltage Vᵢₙ is not in the preset alternating-current input voltage normal range, or the high-voltage bus voltage V_{pfc} is not in the preset high-voltage bus voltage normal range.

In this embodiment, the first core control chip has at least a first comparator connected to the PFC voltage sampling input channel, and the first comparator is connected to an input terminal of the hardwired channel H. In the PFC controller 106, a V_{pfc} voltage sampling channel of the first core control chip is set to be associated with the first comparator built in the chip. An output of the first comparator is connected to the input terminal of the hardwired channel H. Comparison logic is set as that the first comparator outputs the high level when the voltage V_{pfc} is less than a preset voltage value. A hardware device built in the chip is used to enable the PFC controller 106 to have a faster response speed for dropping of the V_{pfc} voltage. Another fault may still be judged by using software in the chip. According to the foregoing method, the PFC controller 106 can judge, in real time according to the sampled signal thereof, whether the PFC power circuit 102 has the abnormal state causing the circuit failure. If so, the PFC controller 106 outputs the fault protection signal (for example, outputs the high level). When detecting the fault protection signal output by the PFC controller 106 (that is, the low level changes into the high level), the bridge-type circuit controller 107 performs the fault protection action to stop output of the bridge-type isolation conversion power circuit 104. Because the hardwired channel H is asynchronously triggered, information transmission is fast, which is about 200 ns. After this system is used, quick response can be made when it is detected that the PFC power circuit 102 has the abnormal state causing the circuit failure, thereby protecting the bridge-type isolation conversion power circuit 104.

Certainly, if a hardware condition of the first core control chip permits, for example, the first core control chip further has a second comparator connected to the alternating current sampling input channel and a third comparator connected to the alternating voltage sampling input channel, an independent sampling channel and comparator need to be configured for each channel of signal, and finally, outputs of all comparators are connected to the hardwired channel H after being connected in parallel. During use, the second comparator, the third comparator, and the first comparator are connected to the input terminal of the hardwired channel H after being connected in parallel. The first core control chip judges the abnormal state by using the comparators, which is implemented through interaction between an internal sampling channel configured in the chip and the comparators built in the chip. In addition, outputs of the comparators are directly connected to the hardwired channel H. A real-time signal collected through a sampling channel is input into a comparator connected to the sampling channel. The comparator compares a real-time signal value with preset fault values (including the preset alternating-current input current normal range, the preset alternating-current input voltage normal range, and the preset high-voltage bus voltage normal range). If the real-time signal value is greater than or less than the preset fault value, the corresponding comparator directly outputs the high level through the hardwired channel H. In this method, a protection response speed for faults such as overvoltage, undervoltage, and overcurrent is further increased by using the hardware device built in the first core control chip, thereby increasing a system safety margin. Certainly, the first core control chip may alternatively judge the abnormal state by using software disposed therein.

In this embodiment, the first core control chip of the PFC controller 106 is connected to the bridge-type circuit controller 107 through digital communication COM, and the digital communication COM is used for communication interaction of data, a working state, and a control instruction. The digital communication COM has a large data volume, requires a long data processing time, and transmits data once with a fixed cycle of 100 ms.

As shown in FIG. 3, in this embodiment, the first core control chip of the PFC controller 106 is connected to the bridge-type circuit controller 107 through the hardwired channel H, the hardwired channel H is configured to transmit the data related to the abnormal state of the PFC power circuit 102, and the PFC controller 106 keeps to output a low level (for example, 0 V) to the bridge-type circuit controller 107 if the PFC controller 106 judges that the abnormal state does not exist or the PFC controller 106 outputs a high level (for example, 3.3 V) and the high level is maintained during a period of the abnormal state if the PFC controller 106 judges that the abnormal state exists. The PFC controller 106 outputs the low level when the abnormal state disappears.

Digital communication manners usually include a universal asynchronous receiver/transmitter (UART), a synchronous serial bus (12C), a serial peripheral interface (SPI), a controller area network (CAN) bus, and the like. These communication manners have large data transmission volumes and long transmission cycles (millisecond levels), and are not suitable for transmission of signals having small information amounts and requiring short transmission cycles (microsecond or nanosecond levels) such as the abnormal state in the charger. Therefore, in this embodiment, data such as the abnormal state is transmitted through the hardwired channel H.

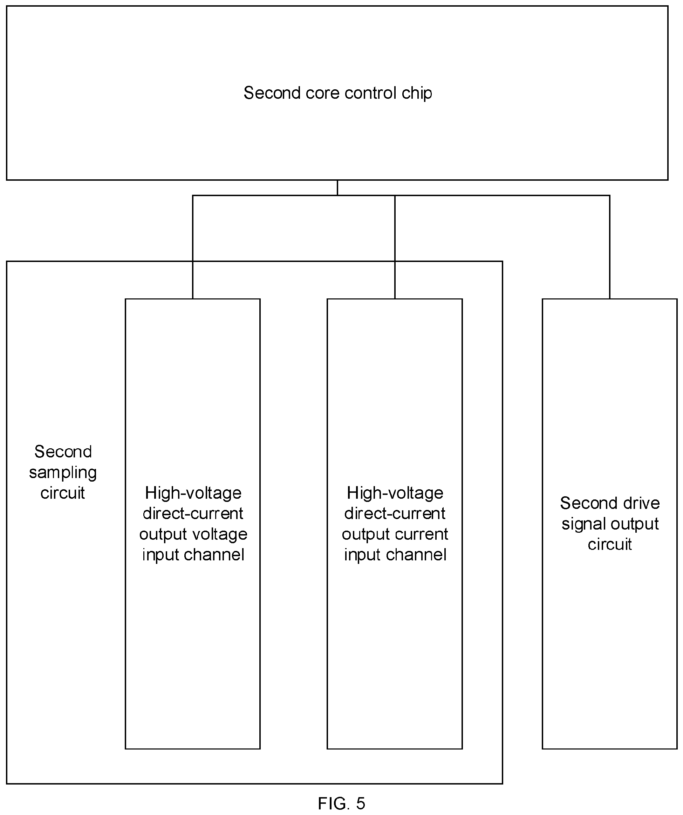

As shown in FIG. 5, in this embodiment, the bridge-type circuit controller 107 includes a second core control chip and a second sampling circuit and a second drive signal output circuit that are separately connected to the second core control chip. The bridge-type circuit controller 107 is connected to the collection bridge-type isolation conversion power circuit 104 through the second sampling circuit and the second drive signal output circuit separately. The second sampling circuit is configured to collect a high-voltage direct-current output current Iₒᵤₜ and a high-voltage direct-current output voltage Vₒᵤₜ that are output by the bridge-type isolation conversion power circuit 104. The second drive signal output circuit (that is, a second drive signal output channel) is configured to output a drive signal Q2. The second core control chip is configured to output the drive signal Q2 to drive a second power device in the bridge-type circuit controller 107, and stop output of the drive signal Q2 when detecting the fault protection signal output by the PFC controller 106 or detecting that the bridge-type circuit controller 107 has an abnormal state causing circuit failure. Therefore, hardware of the bridge-type isolation conversion power circuit 104 is protected, and an internal loop is prevented from having overcurrent.

As shown in FIG. 5, the second sampling circuit includes a high-voltage direct-current output voltage input channel and a high-voltage direct-current output current input channel. The high-voltage direct-current output voltage input channel is configured to collect the high-voltage direct-current output voltage Vₒᵤₜ output by the drive bridge-type circuit controller 107. The high-voltage direct-current output current input channel is configured to collect the high-voltage direct-current output current Iₒᵤₜ output by the drive bridge-type circuit controller 107.

In this embodiment, the collected high-voltage direct-current output voltage Vₒᵤₜ is compared with a preset high-voltage direct-current output voltage; and the high-voltage direct-current output current Iₒᵤₜ is compared with a preset high-voltage direct-current output current. It is considered that the abnormal state exists if the high-voltage direct-current output voltage Vₒᵤₜ is greater than the preset high-voltage direct-current output voltage, the high-voltage direct-current output current Iₒᵤₜ is greater than the preset high-voltage direct-current output current, or a level received through the hardwired channel H is a high level.

As shown in FIG. 3, in this embodiment, the alternating current input 101 includes four inputs: a live wire L1, a live wire L2, a live wire L3, and a neutral wire N. The PFC power circuit 102 includes a single-phase alternating current input mode and a three-phase alternating current input mode that are used to convert a single-phase alternating current or a three-phase alternating current into a high-voltage constant direct current. The live wire L1 and the neutral wire N are connected to the PFC power circuit 102 when the PFC power circuit 102 is in the single-phase alternating current mode. The PFC power circuit 102 converts the single-phase alternating current into the high-voltage constant direct current. The live wire L1, the live wire L2, the live wire L3, and the neutral wire N are all connected to the PFC power circuit 102 when the PFC power circuit 102 is in the three-phase alternating current mode. The PFC power circuit 102 converts the three-phase alternating current into the high-voltage constant direct current.

As shown in FIG. 3, in this embodiment, the vehicle-mounted charger fault rapid protection system further includes an auxiliary power supply 108. The auxiliary power supply 108 is separately connected to the PFC controller 106 and the bridge-type circuit controller 107.

In this embodiment, the power battery 105 may be any type of rechargeable energy storage apparatus such as a lithium ion battery, a nickel-hydrogen battery, a lead-acid battery, a sodium-sulfur battery, or a super capacitor.

In this embodiment, the bridge-type isolation conversion power circuit 104 is a general term for a type of circuit that uses a bridge-type architecture and in which primary and secondary sides are isolated through a transformer, which has a function of bucking/boosting an input constant direct-current voltage according to a load requirement to implement outputting in a wide voltage range. This type of circuit used in the charger may be specifically any one of a plurality of circuit architectures such as a resonant bridge LLC, a dual-active bridge DAB, and a phase-shift full bridge PSFB.

As shown in FIG. 2, in the conventional technology, a first controller needs to collect a voltage V_{pfc1} of the PFC power circuit 102 through one sampling channel. An isolation circuit collects a voltage V_{pfc2} of the PFC power circuit through another sampling channel, and inputs the voltage V_{pfc2} into a second controller. That is, the sampling signal can be shared with sampling of the PFC output voltage of the PFC power circuit. In addition, the entire system requires a redundant sampling channel and an isolation circuit required thereby, resulting in an increase in complexity of the circuit, and increases in a size and costs of the circuit.

As shown in FIG. 3, in this embodiment, the PFC controller 106 is connected to the bridge-type circuit controller 107 through the hardwired channel H, and the hardwired channel H is configured to transmit the data such as the abnormal state. Because the transmission speed of the hardwired channel H is about 200 ns, only one sampling channel is required to sample V_{pfc} and input V_{pfc} into the PFC controller. Then, V_{pfc} is transmitted to the bridge-type circuit controller 107 through the hardwired channel H. Therefore, the PFC output voltage of the PFC power circuit is sampled and used as the sampled signal.

Because the transmission speed of the hardwired channel H is about 200 ns, even if the voltage V_{pfc} is first input into the PFC controller and then transmitted to the bridge-type circuit controller 107, the bridge-type circuit controller 107 can still be rapidly protected when it is judged that the PFC power circuit 102 has the abnormal state causing the circuit failure. According to a project implementation measurement, from generating an external fault condition, for example, V_{pfc} abruptly drops, to stopping outputting of the bridge-type circuit drive signal Q2, a response time is less than 1 microsecond.

Compared with the circuit shown in FIG. 2, one sampling channel and an isolation circuit required thereby are omitted from this system. In addition, because the isolation circuit (the isolation circuit usually includes devices such as one digital isolator, six groups of filter circuits, and one group of voltage regulation circuits) is omitted, it can be learned from FIG. 2 and FIG. 3 that one channel may be further omitted from the auxiliary power supply, that is, one transformer, four diodes, and matched resistor-capacitor devices may be omitted. Therefore, overall costs of the system can be reduced by 5%, and a size can be reduced by 5%.

In this embodiment, a vehicle-mounted charger fault rapid protection method is provided, and adopts the vehicle-mounted charger fault rapid protection system described in the embodiment. The method includes the following steps:

The PFC controller 106 judges, in real time according to a sampled signal thereof, whether the PFC power circuit has an abnormal state causing circuit failure.

A fault protection signal is output to the bridge-type circuit controller 107 when the PFC controller 106 judges that the abnormal state exists.

The bridge-type circuit controller 107 performs a fault protection action to stop output of the bridge-type isolation conversion power circuit 104 when the bridge-type circuit controller 107 judges, in real time according to the fault protection signal or collected high-voltage direct-current output current Iₒᵤₜ and high-voltage direct-current output voltage Vₒᵤₜ, that the bridge-type circuit controller has an abnormal state causing circuit failure.

In this embodiment, a vehicle is provided, and adopts the vehicle-mounted charger fault rapid protection system described in the embodiment.

In addition, the terms "first" and "second" are used for purposes of description only and are not to be understood as indicating or implying relative importance or implying the quantity of indicated technical features. Therefore, a feature defined with "first" or "second" may explicitly or implicitly include at least one feature.

The foregoing embodiments are preferred implementations of the present invention. However, the implementations of the present invention are not limited to the foregoing embodiments. Any other change, modification, substitution, combination, and simplification without departing from the present invention shall be equivalent replacement manners, and shall be included in the protection scope of the present invention.

## Claims

1. A vehicle-mounted charger fault rapid protection system, comprising: a PFC power circuit (102), a high-voltage bus capacitor (103), a bridge-type isolation conversion power circuit (104), a PFC controller (106), and a bridge-type circuit controller (107), wherein the PFC power circuit (102) is separately connected to the high-voltage bus capacitor (103) and the PFC controller (106), the bridge-type isolation conversion power circuit (104) is separately connected to the high-voltage bus capacitor (103) and the bridge-type circuit controller (107), the PFC power circuit (102) is configured to connect to an alternating current input (101), and the bridge-type isolation conversion power circuit (104) is configured to connect to a power battery (105); **characterized in that**
the bridge-type circuit controller (107) is connected to the PFC controller (106) through a hardwired channel H, and the hardwired channel H is configured to transmit data related to an abnormal state of the PFC power circuit (102); and
the PFC controller (106) is configured to judge, in real time according to a sampled signal thereof, whether the PFC power circuit (102) has an abnormal state causing circuit failure, and if so, the PFC power circuit (102) is configured to output a fault protection signal and input the fault protection signal into the bridge-type circuit controller (107) by means of the hardwired channel H; and the bridge-type circuit controller (107) is configured to perform a fault protection action to stop output of the bridge-type isolation conversion power circuit (104) when detecting the fault protection signal output by the PFC controller (106).

2. The vehicle-mounted charger fault rapid protection system according to claim 1, wherein the bridge-type circuit controller (107) is further configured to: collect a high-voltage direct-current output current Iₒᵤₜ and a high-voltage direct-current output voltage Vₒᵤₜ that are outputted by the bridge-type isolation conversion power circuit (104), and judge, in real time according to the collected high-voltage direct-current output current Iₒᵤₜ and high-voltage direct-current output voltage Vₒᵤₜ, whether the bridge-type circuit controller (107) has an abnormal state causing circuit failure; and if so, perform the fault protection action to stop output of the bridge-type isolation conversion power circuit (104).

3. The vehicle-mounted charger fault rapid protection system according to claim 1, wherein the PFC controller (106) comprises a first core control chip and a first sampling circuit and a first drive signal output circuit that are connected to the first core control chip, and the PFC controller (106) is connected to the PFC power circuit (102) through the first sampling circuit and the first drive signal output circuit separately;
the first sampling circuit is configured to collect an alternating-current input current Iᵢₙ, an alternating-current input voltage Vᵢₙ, and a high-voltage bus voltage V_{pfc} that are output by the PFC power circuit (102);
the first drive signal output circuit is configured to output a drive signal Q1 to the PFC power circuit (102); and
the first core control chip is configured to output the drive signal Q1 to drive a first power device in the PFC power circuit (102), and stop output of all the drive signals Q1 when an abnormal fault occurs in the PFC power circuit (102).

4. The vehicle-mounted charger fault rapid protection system according to claim 3, wherein the first sampling circuit comprises an alternating current sampling input channel, an alternating voltage sampling input channel, and a PFC voltage sampling input channel;
the alternating current sampling input channel is configured to collect the alternating-current input current Iᵢₙ output by the PFC power circuit (102);
the alternating voltage sampling input channel is configured to collect the alternating-current input voltage Vᵢₙ output by the PFC power circuit (102); and
the PFC voltage sampling input channel is configured to collect the high-voltage bus voltage V_{pfc} output by the PFC power circuit (102).

5. The vehicle-mounted charger fault rapid protection system according to claim 4, wherein
the collected alternating-current input current Iᵢₙ is compared with a preset alternating-current input current normal range;
the collected alternating-current input voltage Vᵢₙ is compared with a preset alternating-current input voltage normal range;
the collected high-voltage bus voltage V_{pfc} is compared with a preset high-voltage bus voltage normal range; and
it is considered that the PFC power circuit (102) has the abnormal state if the alternating-current input current Iᵢₙ is not in the preset alternating-current input current normal range, the alternating-current input voltage Vᵢₙ is not in the preset alternating-current input voltage normal range, or the high-voltage bus voltage V_{pfc} is not in the preset high-voltage bus voltage normal range.

6. The vehicle-mounted charger fault rapid protection system according to claim 4, wherein the first core control chip has at least a first comparator connected to the PFC voltage sampling input channel, and the first comparator is connected to an input terminal of the hardwired channel H.

7. The vehicle-mounted charger fault rapid protection system according to claim 5, wherein the first core control chip further has
a second comparator connected to the alternating current sampling input channel; and
a third comparator connected to the alternating voltage sampling input channel; and
the second comparator, the third comparator, and the first comparator are all connected to the input terminal of the hardwired channel H.

8. The vehicle-mounted charger fault rapid protection system according to claim 3, wherein the first core control chip of the PFC controller (106) is connected to the bridge-type circuit controller (107) through the hardwired channel H, the hardwired channel H is configured to transmit the data related to the abnormal state of the PFC power circuit (102), and the PFC controller (106) is configured to keep to output a low level to the bridge-type circuit controller (107) if the PFC controller (106) judges that the abnormal state does not exist or the PFC controller (106) is configured to output a high level and the high level is maintained during a period of the abnormal state if the PFC controller (106) judges that the abnormal state exists.

9. The vehicle-mounted charger fault rapid protection system according to claim 3, wherein the first core control chip of the PFC controller (106) is connected to the bridge-type circuit controller (107) through digital communication COM, and the digital communication COM is used for communication interaction of data, a working state, and a control instruction.

10. The vehicle-mounted charger fault rapid protection system according to claim 1, wherein the bridge-type circuit controller (107) comprises a second core control chip and a second sampling circuit and a second drive signal output circuit that are separately connected to the second core control chip, and the bridge-type circuit controller (107) is connected to the collection bridge-type isolation conversion power circuit (104) through the second sampling circuit and the second drive signal output circuit separately;
the second sampling circuit is configured to collect a high-voltage direct-current output current Iₒᵤₜ and a high-voltage direct-current output voltage Vₒᵤₜ that are output by the bridge-type isolation conversion power circuit (104);
the second drive signal output circuit is configured to output a drive signal Q2 to the bridge-type isolation conversion power circuit (104); and
the second core control chip is configured to output the drive signal Q2 to drive a second power device in the bridge-type circuit controller (107), and stop output of the drive signal Q2 when detecting the fault protection signal output by the PFC controller (106) or detecting that the bridge-type circuit controller (107) has an abnormal state causing circuit failure.

11. The vehicle-mounted charger fault rapid protection system according to claim 10, wherein the second sampling circuit comprises a high-voltage direct-current output voltage input channel and a high-voltage direct-current output current input channel;
the high-voltage direct-current output voltage input channel is configured to collect the high-voltage direct-current output voltage Vₒᵤₜ output by the drive bridge-type circuit controller (107); and
the high-voltage direct-current output current input channel is configured to collect the high-voltage direct-current output current Iₒᵤₜ output by the drive bridge-type circuit controller (107).

12. The vehicle-mounted charger fault rapid protection system according to claim 11, wherein
the collected high-voltage direct-current output voltage Vₒᵤₜ is compared with a preset high-voltage direct-current output voltage;
the high-voltage direct-current output current Iₒᵤₜ is compared with a preset high-voltage direct-current output current; and
outputting of the drive signal Q2 is stopped if the high-voltage direct-current output voltage Vₒᵤₜ is greater than the preset high-voltage direct-current output voltage, the high-voltage direct-current output current Iₒᵤₜ is greater than the preset high-voltage direct-current output current, or a level received through the hardwired channel H is a high level.

13. The vehicle-mounted charger fault rapid protection system according to any one of claims 1 to 12, wherein the alternating current input (101) comprises four inputs: a live wire L1, a live wire L2, a live wire L3, and a neutral wire N;
the PFC power circuit (102) comprises a single-phase alternating current input mode and a three-phase alternating current input mode that are used to convert a single-phase alternating current or a three-phase alternating current into a high-voltage constant direct current;
the live wire L1 and the neutral wire N are connected to the PFC power circuit (102) when the PFC power circuit (102) is in the single-phase alternating current mode; and
the live wire L1, the live wire L2, the live wire L3, and the neutral wire N are all connected to the PFC power circuit (102) when the PFC power circuit (102) is in the three-phase alternating current mode.

14. The vehicle-mounted charger fault rapid protection system according to any one of claims 1 to 12, further comprising an auxiliary power supply (108), wherein the auxiliary power supply (108) is separately connected to the PFC controller (106) and the bridge-type circuit controller (107).

15. A vehicle-mounted charger fault rapid protection method, adopting the vehicle-mounted charger fault rapid protection system according to any one of claims 1 to 14, wherein the method comprises:
judging by the PFC controller in real time according to a sampled signal thereof, whether the PFC power circuit has an abnormal state causing circuit failure;
outputting a fault protection signal to the bridge-type circuit controller (107) when the PFC controller judges that the abnormal state exists; and
performing by the bridge-type circuit controller (107), a fault protection action based on the fault protection signal, to stop output of the bridge-type isolation conversion power circuit (104).

16. A vehicle adopting the vehicle-mounted charger fault rapid protection system according to any one of claims 1 to 14.
